# EUROPEAN PATENT APPLICATION

(11) **EP 4 704 453 A1**
(43) Date of publication of application: **04.03.2026**
(21) Application number: 25188717.0
(22) Date of filing: 10.07.2025
(51) Int. Cl.: H04W 4/90, H04M 3/51, H04M 3/42, H04M 3/523, H04W 4/02

(54) **PUBLIC SAFETY ANSWERING POINT OUTAGE CALLBACK**

(30) Priority: 29.08.2024 US 202418818906
(71) Applicant: Intrado Life & Safety, Inc, Longmont, CO 80503 (US)
(72) Inventor: BRKOVIC, Michel, Longmont, 80503 (US); SNAPP, John Lawrence, Longmont, 80503 (US)
(74) Representative: Boult Wade Tennant LLP

(57) **Abstract**

A method includes performing a first determination that a first communication was placed from a telephone number but was not received by a public safety answering point (PSAP); identifying the telephone number; and performing a second determination whether a response to a second communication to the telephone number was received.

## Description

### BACKGROUND

### Technical Field

This disclosure relates to emergency dispatch and response and, in particular, to a callback service following an outage at an emergency dispatch and response center.

### Related Art

Public safety answering points (PSAPs) are call centers in which communications for primary or specialized emergency services are received and handled. Primary emergency services can include police, fire, emergency medical services, for example. Specialized emergency services can include animal control services, police tactical units, and search and rescue, for example.

PSAPs can receive a variety of communications. For example, PSAPs can receive telephone calls from a public switched telephone network (PSTN) and/or a mobile network (for example, cellular network). Some PSAPs can additionally or alternatively receive Voice over Internet Protocol (IP) calls. Some modern PSAPs can receive text messages including Short Message Service (SMS), Multimedia Messaging Service (MMS), Rich Communication Services (RCS), and/or Simple Notification Service (SNS) services.

Thus, PSAPs can receive a variety of communications over a variety of mediums.

### BRIEF SUMMARY

In a first implementation of the present disclosure, a method includes performing a first determination that a first communication was placed from a telephone number but was not received by a public safety answering point (PSAP); identifying the telephone number; and performing a second determination whether a response to a second communication to the telephone number was received.

A second implementation is the first implementation, further comprising: determining a second communication, at least in part based on a determination that the response was not received.

A third implementation is the second implementation, further comprising: connecting the second communication to a calltaker.

A fourth implementation is the any of the first through third implementations, further comprising: obtaining, from a database, a first list of placed calls made to the PSAP; and obtaining a second list of received calls that were received by the PSAP, wherein the first determination is at least in part based on the first list and the second list.

A fifth implementation is the fourth implementation, wherein the database is a device-based hybrid (DBH), Voice over Internet Protocol (VOIP), or wireline database.

A sixth implementation is any of the first through fifth implementations, further comprising: determining a calltaker for a return communication; and transmitting communication information to the calltaker.

A seventh implementation is any of the first through sixth implementations, further comprising: determining the telephone number and a location of the first communication.

In an eighth implementation, a system includes a memory that stores at least one instruction; and at least one processor configured to execute the at least one instruction to cause the system to at least perform a first determination that a first communication was placed from a telephone number but was not received by a public safety answering point (PSAP); identify the telephone number; and perform a second determination whether a response to a second communication to the telephone number was received.

A ninth implementation is the eighth implementation, wherein the at least one processor is further configured to cause the system to at least determine a second communication, at least in part based on a determination that the response was not received.

A tenth implementation is the ninth implementation, wherein the at least one processor is further configured to cause the system to at least connect the second communication to a calltaker.

An eleventh implementation is any of the eighth through tenth implementations, wherein the at least one processor is further configured to cause the system to at least obtain, from a database, a first list of placed calls made to the PSAP, and obtain a second list of received calls that were received by the PSAP, and the first determination is at least in part based on the first list and the second list.

A twelfth implementation is the eleventh implementation, wherein the database is a device-based hybrid (DBH), Voice over Internet Protocol (VOIP), or wireline database.

A thirteenth implementation is any of the eighth through twelfth implementations, wherein the at least one processor is further configured to determine a calltaker for a return communication and to transmit communication information to the calltaker.

A fourteenth implementation is any of the eighth through thirteen implementations, wherein the at least one processor is further configured to determine the telephone number and a location of the first communication.

In a fifteenth implementation, a computer-readable medium is encoded with a computer program that, when executed by a system including at least one processor, causes the system to perform operations. The operations include performing a first determination that a first communication was placed from a telephone number but was not received by a public safety answering point (PSAP); identifying the telephone number; and performing a second determination whether a response to a second communication to the telephone number was received.

A sixteenth implementation is the fifteenth implementation, the operations further comprising: determining a second communication, at least in part based on a determination that the response was not received.

A seventeenth implementation is the sixteenth implementation, the operations further comprising: connecting the second communication to a calltaker.

An eighteenth implementation is any of the fifteenth through seventeenth implementations, the operations further comprising: obtaining, from a database, a first list of placed calls made to the PSAP; and obtaining a second list of received calls that were received by the PSAP, wherein the first determination is at least in part based on the first list and the second list.

A nineteenth implementation is the eighteenth implementation, wherein the database is a device-based hybrid (DBH), Voice over Internet Protocol (VOIP), or wireline database.

A twentieth implementation is any of the fifteenth through nineteenth implementations, the operations further comprising: determining a calltaker for a return communication; and transmitting communication information to the calltaker.

A twenty-first implementation is any of the fifteenth through twentieth implementations, the operations further comprising: determining the telephone number and a location of the first communication.

### BRIEF DESCRIPTION OF THE SEVERAL VIEWS OF THE DRAWINGS

Fig. 1 illustrates an example of a PSAP, according to an implementation of the present disclosure.
Fig. 2 illustrates a diagram of an outage in a system, according to an implementation of the present disclosure.
Fig. 3 illustrates an algorithm for PSAP outage callback, according to an implementation of the present disclosure.
Fig. 4 illustrates an algorithm for determining a return communication, according to an implementation of the present disclosure.
Fig. 5 illustrates an algorithm for determining a calltaker for a return communication, according to an implementation of the present disclosure.
Fig. 6 illustrates a computing device, according to an implementation of the present disclosure.

### DETAILED DESCRIPTION

The following foundational information forms a basis from which aspects of the present disclosure can be explained. Such information is offered for purposes of explanation only and, accordingly, should not be construed to limit the scope of the present disclosure, its potential applications, nor the claims.

Under some circumstances, the mediums over which PSAPs receive communications can fail. In this scenario, the PSAP undergoes a communication outage.

Outages arise from any number of situations. For example, in one incident, an outage occurred when a backhoe severed a communication line into a PSAP. It is also possible that a communication network is attacked, causing an outage.

Indeed, less severe outages frequently occur. For example, a telephone network can undergo a few seconds of network congestion during which service might not be available. If a 911 communication is placed during these few seconds, then the PSAP might not receive the communication.

To potentially address these issues and others, various implementations of the present disclosure can implement callback for a PSAP outage, as described herein.

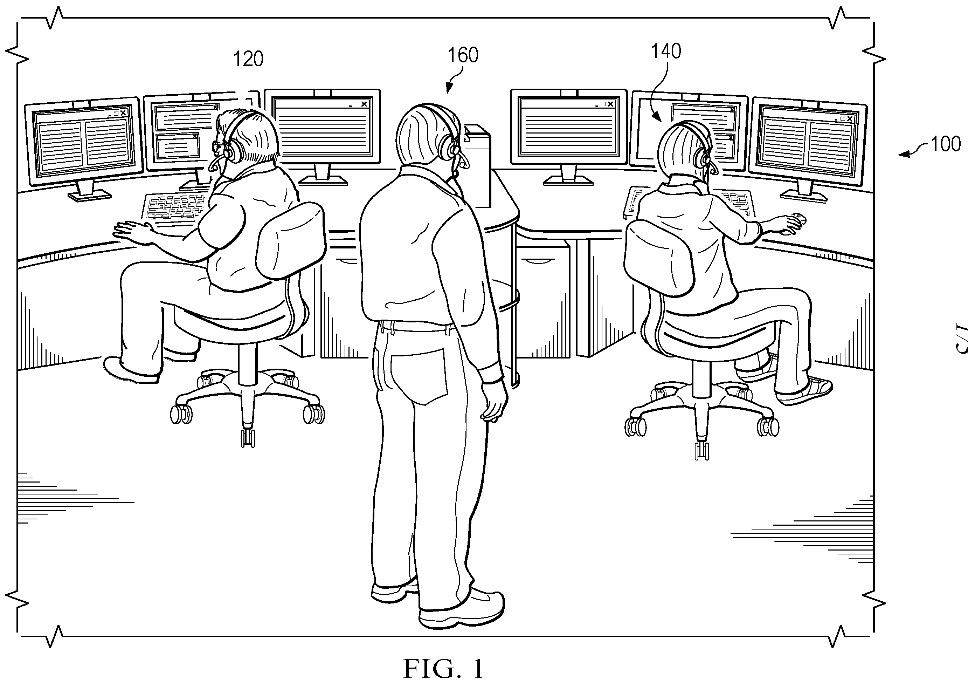

Fig. 1 illustrates an example of a PSAP 100, according to an implementation of the present disclosure.

The illustrated PSAP 100 includes a plurality of positions 120, 140. Each position 120, 140 is a workspace for a different calltaker. In the illustrated implementation, each workspace includes a separate computer, a separate telephone, and three monitors. In other implementations, there can be more or fewer calltakers, and the calltakers can share a computer and/or have more or fewer monitors.

In the illustrated implementation, each calltaker is wearing a headset including headphones and a microphone. In some implementations, the headset does not include a microphone.

The illustrated PSAP also includes a supervisor 160. In Fig. 1, the supervisor 160 is standing and can walk around to positions 120, 140. Thus, the supervisor can supervise the calltakers in positions 120, 140, such as by watching the monitors and/or communicating with the respective calltaker.

The calltakers in positions 120, 140 can respond to communications including emergency calls and texts. The supervisor 160 can sometimes take emergency and/or administrative calls.

A "communication" includes any exchange originating from one point and received by another point using a telecommunications system. Examples of telecommunications systems include the Plain Old Telephone Service (POTS), Integrated Services Digital Network (ISDN) Basic Rate Interface (BRI), cellular telephone systems, and Voice over IP (VoIP). The communication can be carried by any type of medium, such as wired, wireless, satellite, infrared, Bluetooth^{™}, Virtual Private Network (VPN), or a proprietary link.

Further, this communication can be between devices (such as a telephone, cellular telephone, computer, or Internet of Things (IOT) device), between devices and communication platforms, between one or more proprietary devices, and/or between one more elements that leverage artificial intelligence (AI) and/or are powered by machine learning (ML). Communication platforms can include a mobile phone app, such as Facebook Messenger, WhatsApp, LINE, Signal, or Telegram. Further, any type of proxy can be implicated in such communication scenarios (i.e., a communication made on behalf of a device, a system, etc.).

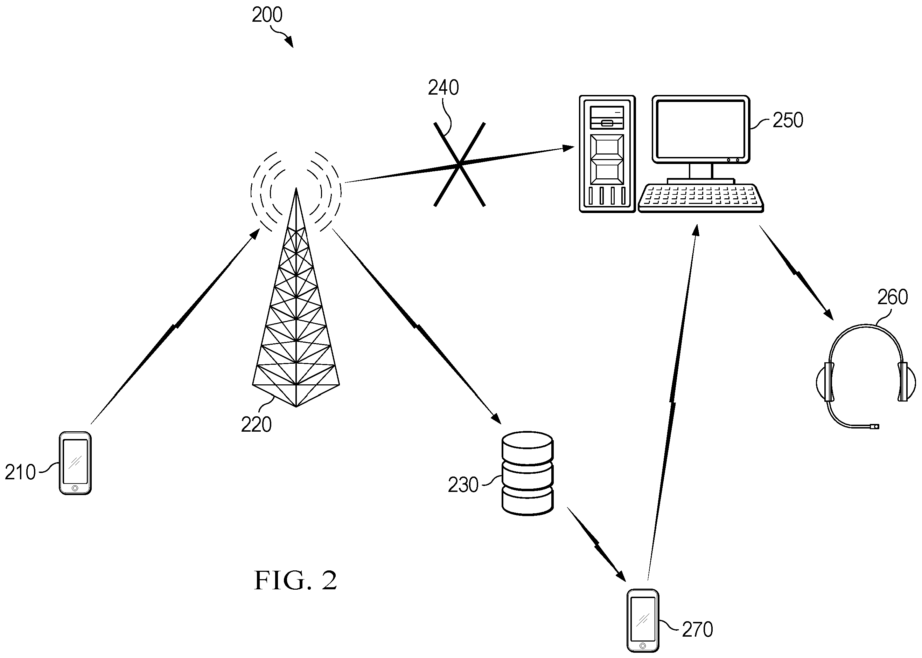

Fig. 2 illustrates a diagram of an outage 240 in a system 200, according to an implementation of the present disclosure. The system 200 includes a first telephone 210, telephony infrastructure 220, a storage 230, a router 250, a calltaker telephone 260, and a second telephone 270.

The first telephone 210 places a communication to a PSAP with which the calltaker telephone 260 is associated. In Fig. 2, the first telephone 210 is illustrated as a mobile or cellular telephone. However, the first telephone 210 can also be a landline, a satellite phone, or a virtual telephone line, for example.

In many implementations, the communication is an emergency communication.

The telephony infrastructure 220 can receive the communication from the first telephone 210. The telephony infrastructure 220 can be or include an antenna, a switch, and/or a router, for example. In at least one implementation in which the communication is a VoIP call, the telephony infrastructure 220 can be implemented by software that runs on a hardware processor.

The telephony infrastructure 220 attempts to forward the communication to the router 250.

The telephony infrastructure 220 can also record information in the storage 230. The information can include a telephone number of the first telephone 210, a time at which the communication was transmitted, and a location of the first telephone 210, for example.

A "telephone number" is a sequence of digits assigned to a landline telephone subscriber station, a wireless electronic telephony device, or another device for data transmission via a network. Such a wireless electronic telephony device can be a radio telephone, a mobile telephone, or a smartphone, for example. The network can be the PSTN or other public and private networks. A single telephone number can be associated with multiple devices, such as in the context of multiple telephones in a single house. A single device can be associated with multiple telephone numbers, such as by using Google Voice.

In some implementations in which the first telephone 210 is a cellular or mobile telephone, the telephony infrastructure 220 can determine the location of the first telephone 210 using antenna (e.g., tower) triangulation. For example, the telephony infrastructure 220 can include one or more antennas of at least three antennas that can measure how far away the first telephone 210 is. Thus, the telephony infrastructure 220 can determine the location of the first telephone 210 based on a location of each of the at least three antennas and a time delay between the first telephone 210 and a respective antenna.

Additionally or alternatively, when the first telephone 210 is a cellular or mobile telephone, the location can be or include a device-based hybrid (DBH) location. In various implementations, the first telephone 210 can determine its DBH location based on data on the first telephone 210.

For example, this data can be or include the global coordinates of the first telephone 210. The first telephone 210 can obtain the global coordinates from a global navigation satellite system (GNSS). Examples of GNSS include Global Positioning System (GPS), Global Navigation Satellite System (GLONASS), BeiDou Navigation Satellite System (BDS), and Galileo. In some implementations, the GNSS can be enhanced by satellite-based augmentation systems (SBAS), such as the Quasi-Zenith Satellite System (QZSS) and the European Geostationary Navigation Overlay Service (EGNOS). In select implementations, the telephony infrastructure 220 can obtain the global coordinates from a stand-alone operational regional navigation satellite system (RNSS), such as the Indian Regional Navigation Satellite System (IRNSS) or NavIC.

Additionally or alternatively, the data can be or include an identifier of a WiFi signal received by the first telephone 210 from a wireless router and/or an access point. This identifier can be or include a Basic Service Set Identifier (BSSID), for example. In many implementations, the BSSID can be, include, and/or identify a media access control (MAC) address of the wireless router or access point.

The BSSID of an access point can be resolved into an approximate location by a database. One such database is maintained by Qualcomm Inc. of San Diego, CA. A similar database can be generated such as through "wardriving" in which a vehicle is driven, while searching for WiFi networks.

The first telephone 210 can acquire an approximate location from such a database by transmitting a BSSID to which the database responds with the approximate location.

Additionally or alternatively, the data can be or include an identifier of a Bluetooth^{™} device from whom the first telephone 210 received a transmission. This identifier can be resolved into an approximate location by a database, as with WiFi. In other implementations, a Bluetooth^{™} detector can transmit its location to the first telephone 210.

In some implementations in which the first telephone 210 uses the Android operating system, the first telephone 210 can determine its DBH location based on the Emergency Location Service (ELS). In some implementations in which the first telephone 210 uses the iOS operating system, the first telephone 210 can determine its DBH location based on the Hybridized Emergency Location (HELO).

When the first telephone 210 transmits a communication to an emergency number, the first telephone 210 can include or indicate its DBH location with the communication. Thus, when the telephony infrastructure 220 receives the communication, the telephony infrastructure 220 can access the DBH location of the first telephone 210.

The storage 230 can be maintained by a mobile phone operating system provider (e.g., Google, Apple) and/or their licensee or partner (e.g., Samsung). In several implementations, the storage 230 is maintained by a mobile telephone carrier (e.g., Verizon, AT&T, and T-Mobile). The storage 230 can alternatively be maintained by a third-party entity, such as Intrado Life & Safety, Inc. of Longmont, CO.

In contrast, when the communication is a VoIP call, the call can include the IP address of the first telephone 210. This IP address can then be resolved into a location. In some implementations, the IP address is first resolved into a domain, and the domain is then resolved into the location.

When the call is via a VoIP technology, the storage 230 can be maintained by a provider of the VoIP service or VoIP application.

When the communication is a wireline call, the storage 230 can be maintained by the telephone service provider. Notably, when a subscriber begins telephone service, the subscriber informs the provider of the location for the service. Thus, in this situation, the telephone service provider can determine the location of the first telephone 210, based on the telephone number from which the call is received.

In some implementations, the telephone number of the communication can be transmitted to an automatic location information (ALI) database (not pictured). The ALI database can return a location provided by the telephone customer when signing up for telephone service.

The outage 240 prevents the communication transmitted by the telephony infrastructure 220 from reaching the router 250. For example, the outage can affect ESInet (Emergency Services IP Network) or CAMA (Centralized Automatic Message Accounting). The outage 240 can occur at any location between at least a portion of the telephony infrastructure 220 and the router 250. For example, the outage 240 can occur between two exchanges, or the outage 240 can occur between a terminal exchange and the router 250.

The router 250 is local to the PSAP to which the communication would have been routed, but for the outage 240. The router 250 can interface with a VIPER^{®} system, such as from Intrado Life & Safety, Inc. of Longmont, CO. That is, when there is no outage, the router 250 can receive a communication from the first telephone 210. In such a situation, the router 250 routes the communication to the calltaker telephone 260.

The calltaker telephone 260 is a telephone at which a calltaker can answer a communication. The calltaker telephone 260 can be implemented in a computer, for example. Although the calltaker telephone 260 is nominally in the PSAP, the calltaker telephone 260 can be a mobile telephone in various implementations.

The second telephone 270 can transmit a communication to the router 250. The second telephone 270 can communicate with the router 250 periodically and/or on-demand by a user. Thus, the communication from the second telephone 270 can serve as a proxy for whether the router 250 can receive a communication from the first telephone 210. That is, it can be determined whether the outage 240 also exists between the second telephone 270 and the router 250. In several implementations, the second telephone 270 can be a mobile or cellular telephone.

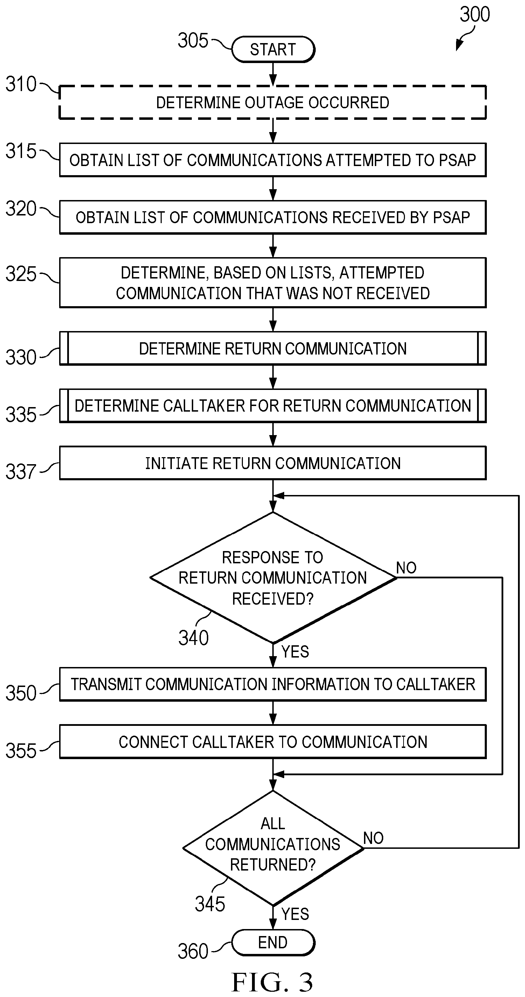

Fig. 3 illustrates an algorithm 300 for PSAP outage callback, according to an implementation of the present disclosure.

In one implementation, the algorithm 300 is performed by a processor within the PSAP. However, because such a processor might be affected by the outage 240, the algorithm 300 can be performed at least partially by a processor on the cloud (e.g., remotely available via a network).

The algorithm 300 begins at 305 and advances to 310 in which the processor optionally determines that an outage has occurred. For example, the second telephone 270 can periodically or on-demand call the router 250. If the call from the second telephone 270 is not received, then the outage 240 has occurred (at least relative to the second telephone 270).

The algorithm 300 then advances to 315.

In 315, the processor obtains, from the storage 230, a first list of calls attempted to the PSAP. As discussed previously, the storage 230 can include a list of calls including the telephone number from which each call was attempted, the time at which each call was attempted, and the location from which the call was attempted. As also discussed previously, the locations can include a DBH location, a VoIP location, or a wireline location.

The algorithm 300 then advances to 320.

In 320, the processor obtains, from a storage, a second list of calls that were received by the PSAP (e.g., by the router 250). This storage can be located within the PSAP, although the storage can be located on the cloud in some implementations. This second list can include the telephone number from which each received call was made (e.g., based on the ANI) and the time at which the call was received. In some implementations, the second list can include the location from which the call was made.

The algorithm 300 then advances to 325.

In 325, the processor can perform a determination that a communication was attempted (e.g., from the first telephone 210) but was not received by the PSAP. The PSAP might not have received this communication due to the outage 240, for example.

In many implementations, this determination is at least in part based on a difference between the first list and the second list. For example, the processor can determine the first list includes a communication attempted from a telephone number and that the second list does not include the communication received from the telephone number.

In some situations, a telephone number might transmit a plurality of communications during the outage, because a user is hurriedly reporting an emergency via a plurality of text messages, for example. In such a situation, although both lists can include the telephone number, the PSAP might not have received at least one of the plurality of communications due to the outage. Thus, in some implementations, the processor can count the number of occurrences of the telephone number on the first list and the number of occurrences of the telephone number on the second list. If the processor determines the number of occurrences of the telephone number on the first list exceeds the number of occurrences of the telephone number on the second list, then the processor can determine that a communication from the telephone number was not received by the PSAP.

In an additional implementation, the processor can compare the time at which each communication from the telephone number was attempted against a time at which each communication from that telephone number was received at the PSAP. For example, the processor can determine whether a communication from a telephone number was attempted without a communication from that telephone number being received by the PSAP within a predetermined period of time (e.g., two minutes). If so, the processor can determine there was at least a temporary outage from that telephone number. Further, because the processor can determine the time at which the unreceived communication was attempted, the processor can more accurately prioritize the order in which to transmit a return communication to that telephone number.

The algorithm 300 then advances to 330.

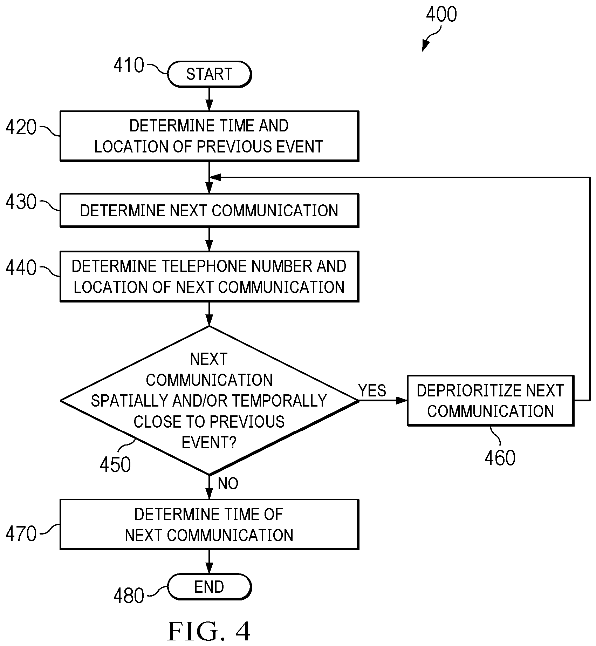

In 330, the processor determines the telephone number of the communication that was determined in 320 to have been attempted by the telephone number but not received by the PSAP. This determination is discussed later in connection with Fig. 4.

The algorithm 300 then advances to 335.

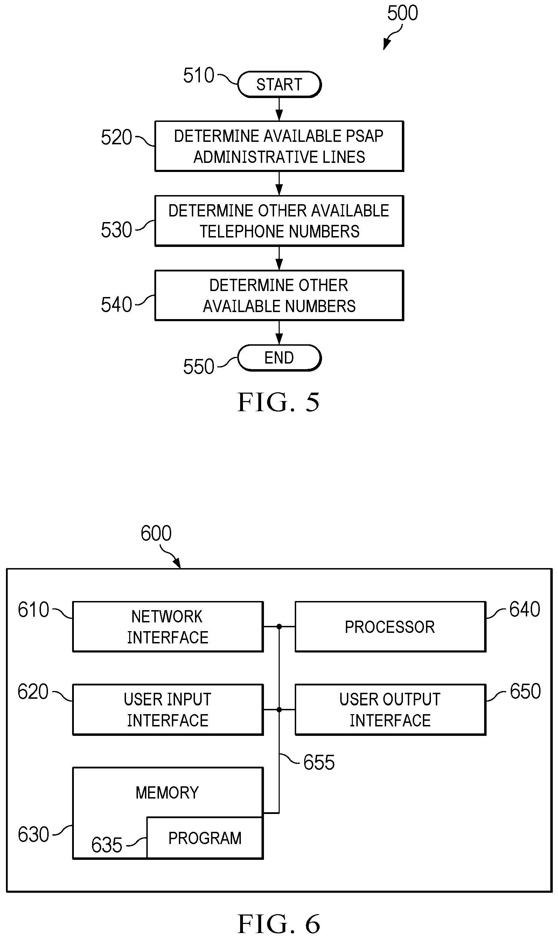

In 335, the processor can perform a determination of a calltaker responsible for the return communication. This determination is discussed in more detail in connection with Fig. 5.

The algorithm 300 then advances to 337.

In 337, the processor initiates the return communication to the determined telephone number. In some implementations, the processor can dial the telephone number by accessing a telephone line or the like. In other implementations, the processor, in conjunction with a network interface, can instruct a telephone (e.g., in the PSAP) to dial the telephone number. In further implementations, the processor, in conjunction with a network interface, can instruct another device (e.g., workstation or smartphone) to itself instruct an operator or calltaker to dial the telephone number.

The algorithm 300 then advances to 340.

In 340, the processor performs a determination whether a response to the return communication was received. In at least one implementation, the response is simply the call to the telephone number of the communication being answered. Thus, in such an implementation, if the call is answered, the processor determines the response was received.

In some implementations, the return communication can include a prompt such as audio reciting, "Please stay on the line if there is an emergency." If the recipient stays on the line for a predetermined period of time, the processor determines the response was received. If the recipient does not stay on the line for the predetermined period of time (e.g., hangs up the call before expiration of the predetermined period of time), then the processor determines the response was not received.

In an alternative implementation, the return communication can include an input prompt, such as audio reciting "Please say 'yes' or press 'one' to confirm there is an emergency." If the recipient fulfills the prompt (e.g., says "yes" or presses the 1 key of a touchtone telephone), the processor determines the response was received. If the recipient does not fulfill the prompt, then the processor determines the response was not received.

If the processor determines the response was not received, the algorithm 300 then advances to 345. If the processor determines the response was received, the algorithm 300 advances to 350.

In 345, the processor determines whether all attempted communications have been returned. If the processor determines all attempted communications have been returned, the algorithm 300 advances to 360. If the processor determines that not all attempted algorithms have been returned, the algorithm 300 advances to 330.

Briefly returning to 340, if the processor determines the response was received, the algorithm 300 advances to 350.

In 350, the processor transmits communication information to a device of the calltaker. In several implementations, the communication information can include the time at which the communication was attempted (e.g., during the outage) and the location of the attempted communication. In some implementations, the communication information can include the telephone number being called.

Typically, when a PSAP receives an emergency communication, the calltaker can contemporaneously access the communication. Further, the calltaker can either see the time at which the call was initiated or, at least, see the current time. In addition, the telephone number of the communication (e.g., provided by an automatic number identification [ANI] database) can be transmitted to an ALI database to retrieve a location of the communication.

In contrast, when an outage occurs, the PSAP does not receive the attempted communication. Therefore, for the calltaker to communicate with the caller, the processor initiates a return communication. Additionally, because the calltaker would not necessarily know the time at which the attempted communication was initiated, the processor can transmit the time of the attempted communication in the communication information.

Further, because there was no communication received by the PSAP, a conventional PSAP would not have access to the location of the attempted communication. However, in select implementations of the present disclosure, the processor can transmit the location of the attempted communication to the calltaker.

The algorithm 300 then advances to 355.

In 355, the processor connects the return communication to the calltaker determined in 335. For example, in the case of the return communication being a telephone call, the processor can begin a conference call with the calltaker and add the calltaker to the return communication. If the calltaker is using a telephone line within the PSAP, then the processor can join the conference call with the return call. In this case, the processor can then hang up its line, and the call between the calltaker and the caller can continue. If the calltaker is using a telephone line outside the PSAP, then the processor will stay on the line.

In the case of the return communication being a text message, the processor can inform the calltaker of the telephone number to which to send a text.

In several implementations, the processor can forward any response received in 340 to the calltaker, as well.

During the call, the calltaker can update information regarding the call. For example, the calltaker can set a location of the event, based on the content of the discussion with the caller.

The algorithm 300 then advances to 345.

In 360, the algorithm 300 concludes.

In the above description, the processor determined whether an outage occurred in 310. In other implementations, the processor can periodically or on-demand perform the processing of 315-325, such that a communication is determined in 325 if an outage occurred.

Fig. 4 illustrates an algorithm 400 for determining a return communication, according to an implementation of the present disclosure.

The algorithm 400 begins in 410 and advances to 420.

In 420, the processor can determine a time and a location of one or more previous events. These events can be reported via one or more communications received just before the outage (e.g., can be the last call prior to the outage), for example.

Sometimes, an emergency (such as a fire) might cause multiple people to call to report the emergency, but the emergency might also itself cause an outage. That is, the outage might occur after one of a plurality of communications reporting the emergency are received. In this situation, one or more communications received during the outage might be redundant to a communication received prior to the outage.

In a basic implementation, the processor can determine the location of a previous event based on a location from which a communication reporting the event was made. For example, this determination can be based on searching an ALI database based on a telephone number of that communication.

In an advanced implementation, the processor can determine the location of the previous event based on a report of the location of the event. The processor can receive this report from the caller during the communication or from emergency personnel dispatched to the event.

In another implementation, the processor can determine the location of the previous event based on an average of a location of two or more communications. To increase the likelihood that the communications relate to a same or related event, the processor can select the communications based on them occurring within a predetermined distance (e.g., 100 feet or 100 yards) and/or a predetermined time (e.g., 10 or 15 minutes) of each other. For example, a first communication might occur 99 feet from a second communication that occurs one minute later. If the predetermined distance is 100 feet and the predetermined time is 10 minutes, the processor can determine the second communication relates to the same event as the first communication. In this case, the processor can determine the location of the event is an average of the location of the first communication and the location of the second communication.

In a non-outage situation, calls are received across time. However, in an outage situation, there can be a delay in detecting the outage, so a PSAP might become aware of several calls at the same time. In this situation, the calltakers try to address the attempted, unanswered calls as new calls continue to come in. Thus, prioritizing the calls can be advantageous to efficiently use limited calltaker resources.

The algorithm 400 then advances to 430.

In 430, the processor can determine a next communication based on the telephone numbers determined in 325, for example. The next communication can be an earliest attempted communication that has not yet been addressed, for example.

In select implementations, the processor can determine the next communication based at least in part on one or more densities of the remaining communications received during the outage. For example, when multiple calls compete for scarce calltaker resources, a single report of an emergency might be considered less urgent than an emergency for which there are many reports.

Thus, in one or more implementations, the processor can calculate (e.g., cluster) the locations of the remaining communications and determine the next communication is one from the largest cluster of communications.

The algorithm 400 then advances to 440.

In 440, the processor can determine a telephone number from which the next communication was attempted. In addition, the processor can determine a location of the next communication, based on the location in the first list, for example. Thus, the processor can more accurately determine the location of the first telephone 210, in a situation in which the first telephone 210 is moving (e.g., in a moving vehicle).

The algorithm 400 then advances to 450.

In 450, the processor can determine whether the next communication is spatially and/or temporally close to a previous event.

For example, the processor can determine whether the next communication is within a predetermined distance (e.g., 100 feet) of a location of the previous event. In addition or alternatively, the processor can determine whether the next communication is within a predetermined time (e.g., 15 minutes) of the previous event.

If the processor determines that the next communication is within the predetermined distance of a location and/or the predetermined time of the previous event, then the algorithm 400 advances to 460. If the processor determines that the next communication is not within the predetermined distance of a location and/or the predetermined time of the previous event, then the algorithm 400 advances to 470.

In 460, the processor deprioritizes the next communication. For example, the processor can add the next communication to a list of deprioritized communications. Thus, after the processor has addressed the remainder of the communications received during the outage, the processor can initiate a return communication to one or more of the deprioritized communications.

The algorithm 400 then returns to 430.

Briefly returning to 450, if the processor determines the next communication is not within the predetermined distance and/or the predetermined time of the previous event, then the algorithm 400 advances to 470.

In 470, the processor determines the time of the return communication.

In various implementations, the processor can create a record for the communication. The record can include the telephone number of the attempted communication and the location of the communication. In addition, the record can include the time at which the communication was attempted.

The algorithm 400 then advances to 480.

In 480, the algorithm for the subprocess illustrated in Fig. 4 concludes.

In some implementations, the predetermined distance discussed above is 100 feet. However, a plurality of calls from a more densely populated area are more likely to be about different emergencies than the same density of calls in a less densely populated area. Therefore, in some other implementations, the processor can calculate the predetermined distance to be inversely proportional to the population density of the location of the previous communication.

In select implementations, the aforementioned processing can be advantageous, even if an outage does not occur. For example, filtering by time and location can advantageously avoid redundant calls, even if no outage occurs.

Fig. 5 illustrates an algorithm 500 for determining a calltaker for a return communication, according to an implementation of the present disclosure.

The algorithm 500 begins at 510 and advances to 520 in which the processor determines the available administrative telephone lines of the PSAP.

For example, the PSAP can register the administrative telephone lines with the processor. The processor can then open each of the telephone lines to determine whether a dialtone is available such that the telephone line is not affected by the outage. Alternatively or additionally, the processor can call each of the administrative lines to determine whether each line is affected by the outage.

The algorithm 500 then advances to 520.

In 520, the processor can determine the telephone numbers of one or more of the calltakers. For example, the calltakers can register their home or cellular phone numbers with the processor prior to the outage. In some implementations, the calltakers can use a smartphone application to contact the processor during an outage. In this situation, the smartphone application can transmit the telephone number of the smartphone executing the application.

The algorithm 500 then advances to 530.

In 530, the processor can determine other available telephone numbers.

The algorithm 500 then advances to 540.

In 540, the processor can determine other available telephone numbers. For example, a FirstNet telephone number can be registered with the processor.

The algorithm 500 then advances to 550 in which the algorithm 500 concludes.

Thus, in an implementation of the present disclosure, an outage 240 can occur in ESInet or CAMA trunks, impacting calls to the PSAP. A dispatcher can log into a service, such as LifeHub from Intrado Life & Safety, Inc., via a web client, for example. The service can query systems to identify recent calls to that PSAP that might have been impacted. Such systems can include ESInet i3 call reporting via an Emergency Call Tracking System (ECatTS) database, DBH / mobile call records via an Emergency Data Broker (EDB) database, and wireline / VOIP call TDRs via a Fixed Mobile Convergence Center (FMCC) database. The dispatcher can select a caller to call back from the list of calls. Then, the service can connect the dispatcher to the caller through a call via a PSTN system, for example. Thus, the system can assemble a list of potentially-impacted calls, allowing the dispatcher to maintain 9-1-1 service continuity.

Further, the above description was written from the point of view that the communication originates from a telephone number. In several implementations, the communication can originate from a login or "handle" on a platform (e.g., a social media platform), an email address, an IP address, and/or a media access control (MAC) address. Some functionality might be lost, such as determining the location of an email address. However, some implementations can achieve similar functionality using pertinent information, such as requesting from a provider the IP address from which the user logged in to write the email.

Fig. 6 illustrates a computing device 600, according to an implementation of the present disclosure. The first telephone 210, the router 250, the calltaker telephone 260, and the second telephone 270 can each be implemented by a computing device 600. Further, the telephony infrastructure 220 can include a computing device 600.

The computing device 600 can include a network interface 610, a user input interface 620, a memory 630, a program 635, a processor 640, a user output interface 650, and a bus 655.

Although illustrated within a single housing, the computing device 600 can be distributed across plural housings or sub-systems that cooperate in executing program instructions. In some implementations, the computing device 600 can include one or more blade server devices, standalone server devices, personal computers (including laptop computers and tablet computers), routers, hubs, switches, bridges, firewall devices, intrusion detection devices, mainframe computers, network-attached storage devices, smartphones and other mobile telephones, and other computing devices. Although the computing device executes the Windows OS, macOS, or Linux in many implementations, the hardware can be configured according to a Symmetric Multi-Processing (SMP) architecture or a Non-Uniform Memory Access (NUMA) architecture.

The network interface 610 provides one or more communication connections and/or one or more devices that allow for communication between the computing device 600 and other computing systems (not shown) over a communication network, collection of networks (not shown), or the air, to support PSAP outage callback, as outlined herein. The network interface 610 can communicate using various networks (including both internal and external networks) such as near-field communications (NFC), Wi-Fi^{™}, Bluetooth, Ethernet, cellular (e.g., 3G, 4G, 5G), white space, 802.11x, satellite, LTE, GSM/HSPA, CDMA/EVDO, DSRC, CAN, GPS, facsimile, or any other wired or wireless interface. Other interfaces can include physical ports (e.g., Ethernet, USB, HDMI, etc.), interfaces for wired and wireless internal subsystems, and the like. Similarly, nodes and user equipment (e.g., mobile devices) of the system can also include suitable interfaces for receiving, transmitting, and/or otherwise communicating data or information in a network environment.

The user input interface 620 can receive one or more inputs from a human. The user input interface 620 can be or include a mouse, a touchpad, a keyboard, a touchscreen, a trackball, a camera, a microphone, a joystick, a game controller, a scanner, and/or any other input device.

The memory 630, also termed a "storage," can include or be one or more computer-readable storage media readable by the processor 640 and that store software. The memory 630 can be implemented as one storage device or across multiple co-located or distributed storage devices or sub-systems. The memory 630 can include additional elements, such as a controller, that communicate with the processor 640. The memory 630 can also include storage devices and/or sub-systems on which data and/or instructions are stored. The computing device 600 can access one or more storage resources to access information to carry out any of the processes indicated in this disclosure and, in particular, Figs. 3-5. In various implementations, the memory 630 stores the program 635 to execute at least a portion of the algorithms illustrated in Figs. 3-5. Further, the program 635, when executed by the computing device 600 generally and/or the processor 640 specifically, can direct, among other functions, performance of the operations of PSAP outage callback, as described herein.

The memory 630 can be or include a read-only memory (ROM), a programmable ROM (PROM), an erasable PROM (EPROM), an electrically erasable PROM (EEPROM), a random-access memory (RAM), a dynamic RAM (DRAM), a static RAM (SRAM), a field programmable gate array (FPGA), a hard drive, a cache memory, a flash memory, a removable disk, or a tape reel. The memory 630 can be or include resistive RAM (RRAM) or a magneto-resistive RAM (MRAM). The information being tracked, sent, received, or stored in the communication system can be provided in any database, register, table, cache, queue, control list, or storage structure, based on particular implementations, all of which could be referenced in any suitable timeframe.

The processor 640 (e.g., a processing unit) can be or include one or more hardware processors and/or other circuitry that retrieve and execute software, especially the program 635, from the memory 630. The processor 640 can be implemented within one processing device, chip, or package and can also be distributed across multiple processing devices, chips, packages, or sub-systems that cooperate. In some implementations, the processor 640 is or includes a Graphics Processing Unit (GPU) or neural processing unit (NPU).

The processor 640 can have any register size, such as a 32-bit register or a 64-bit register, among others. The processor 640 can include multiple cores. Implementations of the processor 640 are not limited to any particular number of threads. The processor 640 can be fabricated by any process technology, such as 14nm process technology.

The user output interface 650 outputs information to a human user. The user output interface 650 can be or include a display (e.g., a screen), a touchscreen, speakers, a printer, or a haptic feedback unit, for example. In many implementations, the user output interface 650 can be combined with the user input interface 620. For example, some such implementations include a touchscreen, a headset including headphones and a microphone, or a joystick with haptic feedback.

In implementations including multiple computing devices, a server of the system or, in a serverless implementation, a peer can use one or more communications networks that facilitate communication among the computing devices to achieve PSAP outage callback, as outlined herein. For example, the one or more communications networks can include or be a local area network (LAN) or wide area network (WAN) that facilitate communication among the computing devices. One or more direct communication links can be included between the computing devices. In addition, in some cases, the computing devices can be installed at geographically distributed locations. In other cases, the multiple computing devices can be installed at one geographic location, such as a server farm or an office.

As used herein, the terms "storage media" or "computer-readable storage media" can refer to non-transitory storage media, such as non-limiting examples of a hard drive, a memory chip, an ASIC, and cache memory, and to transitory storage media, such as carrier waves or propagating signals.

Aspects of the system can be implemented in various manners, e.g., as a method, a system, a computer program product, or one or more computer-readable storage media. Accordingly, aspects of the present disclosure can take the form of a hardware implementation, a software implementation (including firmware, resident software, or micro-code) or an implementation combining software and hardware aspects that can generally be referred to herein as a "module" or a "system." Functions described in this disclosure can be implemented as an algorithm executed by one or more hardware processing units, e.g., the processor 640. In various embodiments, different operations and portions of the operations of the algorithms described can be performed by different processing units. In some implementations, the operations can be achieved by reciprocating software in any of the first telephone 210, the router 250, the calltaker telephone 260, the second telephone 270, and the telephony infrastructure 220. The program 635 can be implemented using reciprocating software. Furthermore, aspects of the present disclosure can take the form of a computer program product embodied in one or more computer-readable media having computer-readable program code embodied, e.g., encoded or stored, thereon. In various implementations, such a computer program can, for example, be downloaded (or updated) to existing devices and systems or be stored upon manufacture of these devices and systems.

Any suitable permutation can be applied to a physical implementation, including the design of the communications network in which the system is implemented. In one embodiment, the bus 655 can share hardware resources with the memory 630 and the processor 640. In this alternative implementation, the computing device 600 can be provided with separate hardware resources including one or more processors and memory elements.

In example implementations, various other components of the computing device 600 can be installed in different physical areas or can be installed as single units.

The communication system can be configured to facilitate communication with machine devices (e.g., vehicle sensors, instruments, electronic control units (ECUs), embedded devices, actuators, displays, etc.) through the bus 655. Other suitable communication interfaces can also be provided for an Internet Protocol (IP) network, a user datagram protocol (UDP) network, or any other suitable protocol or communication architecture enabling network communication with machine devices.

The innovations in this detailed description can be implemented in a multitude of different ways, for example, as defined and covered by the claims and/or select examples. In the description, reference is made to the drawings where like reference numerals can indicate identical or functionally similar elements. Elements illustrated in the drawings are not necessarily drawn to scale. Additionally, certain implementations can include more elements than illustrated in a drawing and/or a subset of the elements illustrated in a drawing. Further, some implementations can incorporate a suitable combination of features from two or more drawings.

The disclosure describes various illustrative implementations and examples for implementing the features and functionality of the present disclosure. The components, arrangements, and/or features are described in connection with various implementations and are merely examples to simplify the present disclosure and are not intended to be limiting. In the development of actual implementations, implementation-specific decisions can be made to achieve specific goals, including compliance with system, business, and/or legal constraints, which can vary from one implementation to another. Additionally, while such a development effort might be complex and time-consuming, it would be a routine undertaking for those of ordinary skill in the art having the benefit of this disclosure.

The systems, methods and devices of this disclosure have several innovative aspects, no one of which is solely responsible for the attributes disclosed herein. Some objects or advantages might not be achieved by implementations described herein. Thus, for example, certain implementations can operate in a manner that achieves or optimizes one advantage or group of advantages as taught herein and not other objects or advantages as taught or suggested herein.

In one example implementation, electrical circuits of the drawings can be implemented on a board of an associated electronic device. The board can be a general circuit board that can hold various components of the internal electronic system of the electronic device and, further, provide connectors for other peripherals. More specifically, the board can provide the electrical connections by which other components of the system can communicate electrically. Any processors (inclusive of digital signal processors, microprocessors, supporting chipsets, etc.) and computer-readable, non-transitory memory elements can be coupled to the board based on configurations, processing demands, and computer designs. Other components such as external storage, additional sensors, controllers for audio/video display, and peripheral devices can be attached to the board as plug-in cards, via cables, or integrated into the board itself. In various implementations, the functionalities described herein can be implemented in emulation form as software or firmware running within one or more configurable (e.g., programmable) elements arranged in a structure that supports these functions. A non-transitory, computer-readable storage medium can include instructions to allow one or more processors to carry out the emulation.

In another example implementation, the electrical circuits of the drawings can be implemented as stand-alone modules (e.g., a device with associated components and circuitry configured to perform a specific application or function) or implemented as plug-in modules into application specific hardware of electronic devices. Implementations of the present disclosure can be readily included in a system-on-chip (SOC) package. An SOC represents an integrated circuit (IC) that integrates components of a computer or other electronic system into one chip. The SOC can contain digital, analog, mixed-signal, and often radio frequency functions on one chip substrate. Other implementations can include a multi-chip-module (MCM), with a plurality of separate ICs located within one electronic package and that interact through the electronic package. In various other implementations, the processors can be implemented in one or more silicon cores in Application Specific Integrated Circuits (ASICs), Field Programmable Gate Arrays (FPGAs), programmable array logic (PAL), generic array logic (GAL), and other semiconductor chips.

The specifications, dimensions, and relationships outlined herein (e.g., the number of devices and logic operations) have been offered for non-limiting purposes of example and teaching. For example, various modifications and changes can be made to the arrangements of components. The description and drawings are, accordingly, to be regarded in an illustrative sense, not in a restrictive sense.

The numerous examples provided herein described interaction in terms of two, three, or more electrical components for purposes of clarity and example. The system can be consolidated in any manner. Along similar design alternatives, the illustrated components, modules, and elements of the drawings can be combined in various possible configurations within the scope of this disclosure. In certain cases, one or more of the functionalities of a given set of flows might be more clearly described by referencing a limited number of electrical elements. The electrical circuits of the drawings are readily scalable and can accommodate many components, as well as more complicated/sophisticated arrangements and configurations. Accordingly, the provided examples do not limit the scope or inhibit the teachings of the electrical circuits as potentially applied to a myriad of other architectures.

In this disclosure, references to various features (e.g., elements, structures, modules, components, steps, operations, characteristics, etc.) included in "one implementation," "example implementation," "an implementation," "another implementation," "some implementations," "various implementations," "other implementations," "alternative implementation," and the like are intended to mean that any such features can be included in one or more implementations of the present disclosure and might or might not necessarily be combined in the same implementations. Some operations can be deleted or omitted where appropriate, or these operations can be modified or changed considerably. In addition, the timing of these operations can be altered considerably. The preceding operational flows have been offered for purposes of example and discussion. Implementations described herein provide flexibility in that any suitable arrangements, chronologies, configurations, and timing mechanisms can be provided.

### Examples

In Example M1, a method includes performing a first determination that a first communication was placed from a telephone number but was not received by a public safety answering point (PSAP); identifying the telephone number; and performing a second determination whether a response to a second communication to the telephone number was received.

Example M2 is the method of Example M1, further comprising: determining a second communication, at least in part based on a determination that the response was not received.

Example M3 is the method of Example M2, further comprising: connecting the second communication to a calltaker.

Example M4 is the method of any of Examples M1-M3, further comprising: obtaining, from a database, a first list of placed calls made to the PSAP; and obtaining a second list of received calls that were received by the PSAP, wherein the first determination is at least in part based on the first list and the second list.

Example M5 is the method of Example M4, wherein the database is a device-based hybrid (DBH), Voice over Internet Protocol (VOIP), or wireline database.

Example M6 is the method of any of Examples M1-M5, further comprising: determining a calltaker for a return communication; and transmitting communication information to the calltaker.

Example M7 is the method of any of Examples M1-M6, further comprising: determining the telephone number and a location of the first communication.

In Example S1, a system includes a memory that stores at least one instruction; and at least one processor configured to execute the at least one instruction to cause the system to at least perform a first determination that a first communication was placed from a telephone number but was not received by a public safety answering point (PSAP); identify the telephone number; and perform a second determination whether a response to a second communication to the telephone number was received.

Example S2 is the system of Example S1, wherein the at least one processor is further configured to cause the system to at least determine a second communication, at least in part based on a determination that the response was not received.

Example S3 is the system of Example S2, wherein the at least one processor is further configured to cause the system to at least connect the second communication to a calltaker.

Example S4 is the system of any of Examples S1-S3, wherein the at least one processor is further configured to cause the system to at least obtain, from a database, a first list of placed calls made to the PSAP, and obtain a second list of received calls that were received by the PSAP, and the first determination is at least in part based on the first list and the second list.

Example S5 is the system of Example S4, wherein the database is a device-based hybrid (DBH), Voice over Internet Protocol (VOIP), or wireline database.

Example S6 is the system of any of Examples S1-S5, wherein the at least one processor is further configured to determine a calltaker for a return communication and to transmit communication information to the calltaker.

Example S7 is the system of any of Examples S1-S6, wherein the at least one processor is further configured to determine the telephone number and a location of the first communication.

In Example C1, a computer-readable medium is encoded with a computer program that, when executed by a system including at least one processor, causes the system to perform operations. The operations include performing a first determination that a first communication was placed from a telephone number but was not received by a public safety answering point (PSAP); identifying the telephone number; and performing a second determination whether a response to a second communication to the telephone number was received.

Example C2 is the medium of Example C1, the operations further comprising: determining a second communication, at least in part based on a determination that the response was not received.

Example C3 is the medium of Example C2, the operations further comprising: connecting the second communication to a calltaker.

Example C4 is the medium of any of Examples C1-C3, the operations further comprising: obtaining, from a database, a first list of placed calls made to the PSAP; and obtaining a second list of received calls that were received by the PSAP, wherein the first determination is at least in part based on the first list and the second list.

Example C5 is the medium of Example C4, wherein the database is a device-based hybrid (DBH), Voice over Internet Protocol (VOIP), or wireline database.

Example C6 is the medium of any of Examples C1-C4, the operations further comprising: determining a calltaker for a return communication; and transmitting communication information to the calltaker.

Example C7 is the medium of any of Examples C1-C5, the operations further comprising: determining the telephone number and a location of the first communication.

## Claims

1. A method, comprising:
performing a first determination that a first communication was placed from a telephone number but was not received by a public safety answering point (PSAP);
identifying the telephone number; and
performing a second determination whether a response to a second communication to the telephone number was received.

2. The method of Claim 1, further comprising:
determining a second communication, at least in part based on a determination that the response was not received.

3. The method of Claim 2, further comprising:
connecting the second communication to a calltaker.

4. The method of any preceding Claim, further comprising:
obtaining, from a database, a first list of placed calls made to the PSAP; and
obtaining a second list of received calls that were received by the PSAP,
wherein the first determination is at least in part based on the first list and the second list.

5. The method of Claim 4, wherein the database is a device-based hybrid (DBH), Voice over Internet Protocol (VOIP), or wireline database.

6. The method of any preceding Claim, further comprising:
determining a calltaker for a return communication; and
transmitting communication information to the calltaker.

7. The method of any preceding Claim, further comprising:
determining the telephone number and a location of the first communication.

8. A system, comprising:
a memory that stores at least one instruction; and
at least one processor configured to execute the at least one instruction to cause the system to carry out the method of any of Claims 1-8.

9. A computer-readable medium encoded with a computer program that, when executed by a system including at least one processor, causes the system to carry out the method of any of Claims 1-8.

## Amended claims

### Amended claims in accordance with Rule 137(2) EPC.

1. A method (300) implemented by one or more processors, the method comprising:
performing (325) a first determination that a first communication was placed from a telephone number but was not received by a public safety answering point, PSAP (100);
identifying (330) the telephone number; and
performing (340) a second determination whether a response to a return communication to the telephone number was received.

2. The method of Claim 1, further comprising:
determining (345) whether all attempted communications to the telephone number have not been received, at least in part based on a determination that the response to the return communication was not received.

3. The method of any preceding Claim, further comprising:
determining (335) a calltaker for performing the return communication; and
transmitting communication information to the calltaker.

4. The method of Claim 3, further comprising:
connecting (355) the return communication to the calltaker.

5. The method of any preceding Claim, further comprising:
obtaining (315), from a database, a first list of placed calls made to the PSAP; and
obtaining (320) a second list of received calls that were received by the PSAP, wherein the first determination is at least in part based on the first list and the second list.

6. The method of Claim 5, wherein the database is a device-based hybrid, DBH, Voice over Internet Protocol, VOIP, or wireline database.

7. The method of any preceding Claim, further comprising:
determining the telephone number and a location of the first communication.

8. A system, comprising:
a memory that stores at least one instruction; and
at least one processor configured to execute the at least one instruction to cause the system to carry out the method of any of Claims 1-8.

9. A computer-readable medium encoded with a computer program that, when executed by a system including at least one processor, causes the system to carry out the method of any of Claims 1-8.
